Europäisches Patentamt

European Patent Office

Office européen des brevets

(19)

(11) Numéro de publication: **0 272 358**
**A1**

(12)

# DEMANDE DE BREVET EUROPEEN

(21) Numéro de dépôt: **86402813.9**

(22) Date de dépôt: **16.12.86**

(51) Int. Cl.4: **G06F 15/70**

(43) Date de publication de la demande:
**29.06.88 Bulletin 88/26**

(84) Etats contractants désignés:
**AT BE CH DE GB IT LI LU NL SE**

(71) Demandeur: **CENTAURE ROBOTIQUE Sarl**
**42-44 Rue des Meuniers**
**F-93100 Montreuil(FR)**

(72) Inventeur: **Billiotte, Jean-Marie**
**8 place des Fédérés**
**F-93160 Noisy-le-Grand(FR)**
Inventeur: **Bouin, Thierry**
**Résidence Le Nerprun**
**F-28500 Boutigny(FR)**
Inventeur: **Primat, Didier**
**15 chemin de Bois Caran Collonge Bellerive**
**CH-1245 Genève(CH)**
Inventeur: **Basset, Frédéric**
**33 rue Frémicourt**
**F-75015 Paris(FR)**
Inventeur: **Beauvois, Jacques**
**3 place des Vosges**
**F-75004 Paris(FR)**

(74) Mandataire: **Pinguet, André**
**CAPRI 28 bis, avenue Mozart**
**F-75016 Paris(FR)**

(54) Procédé électronique automatique d'analyse de formes pour distinguer les zones sensibles symétriques d'une scène et leurs centres de symétrie.

(57) Le procédé de l'invention consiste à analyser les formes (f) d'une scène (S) afin de distinguer automatiquement parmi les formes (f) des zones sensibles (P) symétriques, reliées à des figures auxiliaires (F) et déterminer leurs centres de symétrie (c).

A partir d'une image digitalisée (Id), et d'un point de test (co) situés à l'intérieur de la forme digitalisée (fd) on trace une série de cercles (Co $^k$) de diamètre croissant autour du point (co). Dès qu'un cercle (Co$^i$) coupe la forme digitalisée (fd) on choisit un nouveau centre (c1) décalé par rapport à (co) dans une direction opposée à la direction d'intersection. On construit ainsi, par itération une suite convergente de points (cn) qui, si la figure est symétrique convergent vers le centre de symétrie (c).

EP 0 272 358 A1

Fig. 2

Fig. 2'

1a

## PROCEDE ELECTRONIQUE AUTOMATIQUE D'ANALYSE DE FORMES POUR DISTINGUER LES ZONES SENSIBLES SYMETRIQUES D'UNE SCENE ET LEURS CENTRES DE SYMETRIE

La présente invention se rapporte aux procédés optiques, numériques et électroniques d'analyse et de reconnaissance automatique de formes sur une scène.

Elle concerne plus particulièrement le cas où l'on souhaite distinguer des zones sensibles symétriques et déterminer automatiquement leurs centres de symétrie ; ces dernières étant dispersées aléatoirement sur une scène et intersectées par des figures auxiliaires.

Le procédé de détermination automatique des zones sensibles et de recherche automatique des centres de symétries, proposé par l'invention peut être notamment mis en oeuvre dans tous les cas où :
-les formes de la scène analysée, constituées par des figures auxiliaires et des zones sensibles peuvent être distinguées du fond de la scène par leur niveau de gris après saisie optique notamment à l'aide d'une caméra et digitalisation électronique,
-et où les zones sensibles se départagent géométriquement des figures auxiliaires qui y aboutissent par le fait, qu'au moins localement, elles présentent des dimensions transversales plus importantes et que les zones sensibles constituent donc un renflement vis-à-vis desdites figures auxiliaires qui les intersectent.

On connaît divers procédés destinés à la recherche automatique d'éléments symétriques sur des figures. Ceux-ci sont principalement utilisés, en particulier, dans les domaines :
-de la lecture de plans,
-de l'aide à la programmation, à partir de clichés de référence, dans la réalisation de programme de perçage pour machine à commande numérique,
-de la recherche de mires pour la commande automatique de système de positionnement et de robots.

Dans la description de l'invention, on utilise les termes techniques : "digitaliser" et "pixels".

On entend par digitaliser, l'action d'exprimer sous forme numérique les positions d'entités d'une image, ceci notamment à l'aide d'un organe électronique de calcul.

Par ailleurs, dans le cadre de la présente demande, comme c'est l'usage dans le domaine du traitement d'image, on entend par pixel, et par association isomorphe, à la fois :
-la structure élémentaire d'une image sous forme digitale,
-la structure électronique de base d'un capteur notamment de type CCD, saisissant des images,
-et enfin, la structure élémentaire d'une image digitale restituée sur un écran ou mémorisée après avoir été saisie par un capteur et traitée électroniquement.

Le problème de la recherche automatique des centres de formes symétriques est assez bien résolu par l'art antérieur dès l'instant où :
- les zones sensibles sont de forme simple (cercles, carrés,...),
-et où elles sont distinctes les unes des autres et non combinées avec des formes auxiliaires qui rentrent en contact avec elles.

Ainsi, la demande de brevet français n° 82 00706 (BORNELEC) décrit un dispositif et un procédé automatique de lecture de clichés de pastillage de circuits imprimés. Ce procédé s'applique exclusivement aux cas de pastilles à symétrie centrale et plus spécialement de pastilles circulaires. La scène doit impérativement être absente de tout autre type de figure auxiliaire. La méthode proposée procède par recherche des médianes successives de segments intercédant les bords des pastilles selon des directions (X) et (Y) orthogonales. On part d'un point situé au bord de la pastille. On mesure selon la première direction (X), le développement du segment horizontal de la pastille à ce niveau. Puis, on détermine le segment médian de la pastille dans la direction (Y) perpendiculaire. Et on considère que le centre de la pastille est le milieu dudît segment médian. On peut, pour mettre en oeuvre ce procédé, utiliser une simple cellule optoélectronique déplacée vis-à-vis du cliché de pastillage dans les directions (X) et (Y). Son application est donc simple et efficace. Mais, elle est totalement inexploitable dès l'instant où, ce qui est le cas le plus fréquent, les clichés comportent des figures auxiliaires tels des filaments joignant les pastilles.

Par ailleurs, le brevet US 4.163.212 (WR. BUERGER, K.K. DIXON et J.F. MONIER), décrit un procédé et un dispositif destinés à reconnaître automatiquement les centres des pattes de liaison de circuits intégrés. Les zones sensibles représentant les pattes ont une forme approximativement rectangulaire. Le procédé recommandé consiste essentiellement à analyser, en lignes parallèles, la scène selon au moins deux directions perpendiculaires (X) et (Y). Selon chaque direction (X) et (Y), on détermine la courbe des centres des segments constitués par l'intersection de la ligne d'analyse avec la zone sensible rectangulaire. On considère que le centre de la zone sensible est constitué par l'intersection desdîtes courbes des centres, selon les diverses directions d'analyse. Ce procède permet, pour des figures simples tels des rectangles, de parfaitement déterminer le centre des zones sensibles, à condition expressément que celles-ci soient seules sur la scène et indépendantes. Si des figures auxiliaires complètent la scène, le procédé est totalement inopérant.

Dans le cas où les zones sensibles, dont on recherche les centres de symétrie, sont rattachées à des figures auxiliaires, l'art antérieur ne propose des solutions efficaces que dans certains cas très particuliers où les zones sensibles possèdent des identificateurs.

En particulier la demande de brevet français n° 75 09 846 (G. GLIN et J.L. AMIAR) décrit un procédé et un dispositif d'aide à la programmation de perçage à partir de clichés de circuits imprimés. Ce procédé s'applique à des clichés possédant des pastilles et des filaments. Il consiste à donner aux zones sensibles à identifier un aspect distinctif. On donne notamment un aspect transparent en ménageant un trou central au milieu des pastilles à percer. On digitalise l'image des clichés par fenêtres, et on procède à une analyse et à une identification des zones de l'image possédant l'aspect distinctif. On reconnaît en particulier les trous centraux des pastilles mais également, par erreur, des régions du fond situées entre les filaments. Enfin, on extrait des zones présentant le signe distinctif, celles qui touchent le bord de la fenêtre image. On parvient ainsi à identifier les seules zones sensibles constituées par des trous au milieu de pastilles. Ce procédé fonctionne donc, a priori, parfaitement pour des clichés dont toutes les pastilles sont munies d'un trou de centre. Par contre il induit des erreurs et est donc inapplicable dans tous les clichés présentant des zones à graver au milieu de plans de masse, car ces zones sont confondues avec des points de centre. De plus, le procédé est totalement inopérant dans le cas le plus général où les zones sensibles constituées par les pastilles ne comprennent pas de trou central.

De même, le brevet US 4 295 198 (R.K. CO-PELAND et R.J. DIMAGGIO) décrit un procédé et un dispositif permettant de déterminer automatiquement les trous de centre de pastilles de clichés de circuits imprimés comprenant également des filaments. Le procédé repose sur une série de tests successifs de vérification de correspondance à certains critères dont la sélectivité est croissante. Le séquencement successif de ces tests est destiné à accroître la rapidité de fonctionnement du procédé. Lorsque l'on découvre une figure blanche, on procède successivement à chacun des tests. Le premier test, "BURST", consiste à vérifier si la figure n'a pas des dimensions supérieures à celle du plus gros trou admis. Il permet de procéder à un premier tri très grossier. Le second test, "L.PATH", consiste à se déplacer le long de la forme selon un chemin constitué de portions de segments en coupant les bords à angle droit pour vérifier également une condition de taille maximale. Il tend à éliminer les filaments et assure donc un second tri. Enfin, le dernier test, "PATH" reconnaît, par recherche du contour, les formes de dimension suffisamment petite, dont le contour est refermé sur lui-même. Le procédé consiste à assimiler toutes les formes ayant passé les trois tests à des trous de centrage de pastille. Ce procédé s'applique donc exclusivement à la détection de pastilles par l'intermédiaire de trous de centre.

L'art antérieur ne propose aucun procédé universel de recherche automatique, sur l'image d'une scène (tel un cliché de circuits imprimés), des zones sensibles symétriques (telles des pastilles) relié à des figures auxiliaires (tels des filaments) et de détermination du centre de ces zones sensibles. En sorte qu'actuellement aucun dispositif connu n'est en mesure d'effectuer de manière automatique, fiable, et adaptable à tous les types de forme, la recherche automatique de zones sensibles symétriques, reliées à des figures auxiliaires quelconques.

Toutes les solutions existantes :

-soit s'adaptent à des cas de figure particuliers, ce qui en limite considérablement l'emploi,

-soit nécessitent l'adjonction d'identificateurs, ce qui complique leur mise en oeuvre,

-soit sont inapplicables dès l'instant où les formes sensibles symétriques sont conbinées avec des figures auxiliaires.

L'invention telle qu'elle est revendiquée, ci-après a pour but de remédier globalement à ces inconvénients.

Elle résout le problème consistant :

-sur une scène quelconque, comportant à la fois :

. des zones sensibles symétriques, aléatoirement réparties,

. et des figures auxiliaires quelconques, joignant et intersectant les zones sensibles ;

-et dès l'instant où :

. d'une part, les formes constituées par lesdîtes zones sensibles combinées éventuellement avec les figures auxiliaires sont distingables du fond de la scène, par leur niveau de gris après digitalisation ; (n) pour les zones sensibles et (b) pour le fond ;

. et d'autre part, où les zones sensibles se départagent des figures auxiliaires, au moins localement, par le fait qu'elles présentent des dimensions transversales plus importantes provoquant un renflement local de la forme,

-à distinguer automatiquement lesdîtes zones sensibles sans risque d'erreur,

- et à déterminer automatiquement avec précision les coordonnées du centre de symétrie desdîtes zones sensibles.

Les avantages offerts par l'invention sont :

-une automatisation complète dans la recherche de formes symétriques, applicable à de nombreux domaines de l'industrie tels que le pilotage automatique des robots, l'orientation automatique des objets, la lecture automatique de plans, la programmation automatique de machines à commande numérique,

-une universalité d'application du procédé de recherche automatique, à l'analyse de scènes de nature quelconque, comportant des zones sensibles et des figures auxiliaires de toutes configurations,

- une très grande rapidité et simplicité de fonctionnement du processus de recherche, permettant un fonctionnement en temps réel sur microprocesseur,

-enfin une facilité de câblage électronique, du procédé permettant des temps d'exécution extrêmement courts.

A cet effet, le procédé général de l'invention consiste après avoir identifié une figure située à l'intérieur de la scène, par le niveau de gris d'un de ses points, à déterminer l'existence d'un centre de symétrie par croissance d'une famille de cercles à l'intérieur de la forme et détermination d'un cercle inscrit maximale. Le procédé général de l'invention repose sur la remarque suivante : le cercle maximal inscrit à une figure de symétrie est toujours centré sur le centre de symétrie de cette figure.

Les principales caractéristiques, variantes et avantages de l'invention, se dégagent de la description qui va suivre en regard des dessins annexés ; lesquels descriptions et dessins ne sont donnés qu'à titre d'exemples non limitatifs d'utilisation du procédé de l'invention dans le domaine spécifique du traitement automatique des clichés de circuits imprimés en vue de générer un programme de perçage des circuits imprimés correspondants.

Sur ces dessins :

-la figure 1 est une vue schématique d'une portion de cliché de circuit imprimé, sur laquelle est représentée le principe mis en oeuvre par l'invention pour identifier une forme d'une scène ;

-la figure 2 est une vue partielle du cliché de circuit imprimé de la figure 1, sur laquelle est décrit schématiquement le procédé de recherche automatique de centre de symétrie de l'invention ;

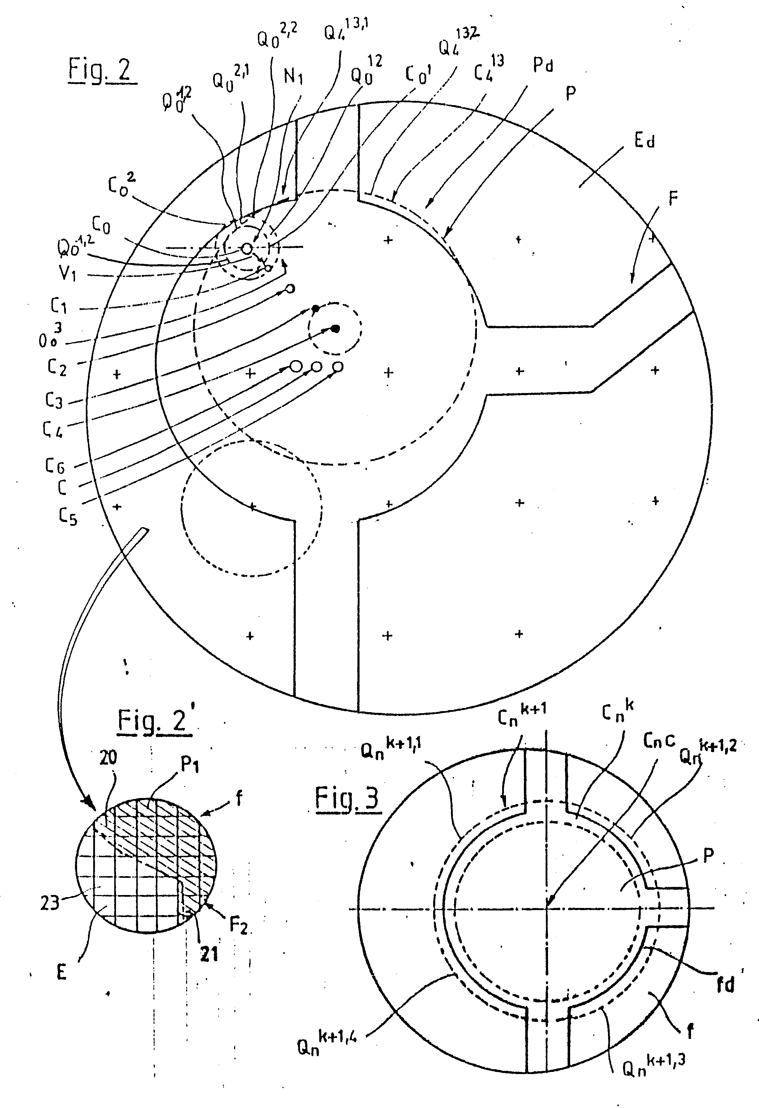

-la figure 2', représente un détail d'une portion de la figure 2 digitalisée ;

-la figure 3, représente le stade final d'identification selon le procédé de l'invention, d'une centre présumé de symétrie,

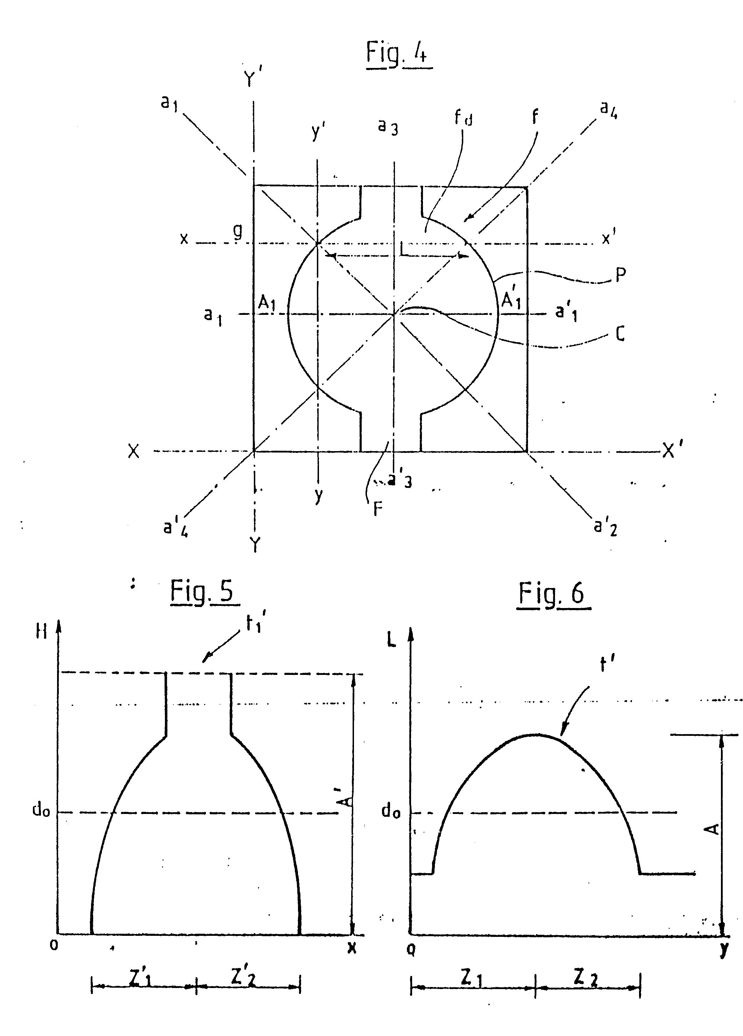

-les figures 4, 5 et 6, décrivent une disposition complémentaire du procédé de l'invention pour confirmer la viabilité d'un centre présumé de symétrie.

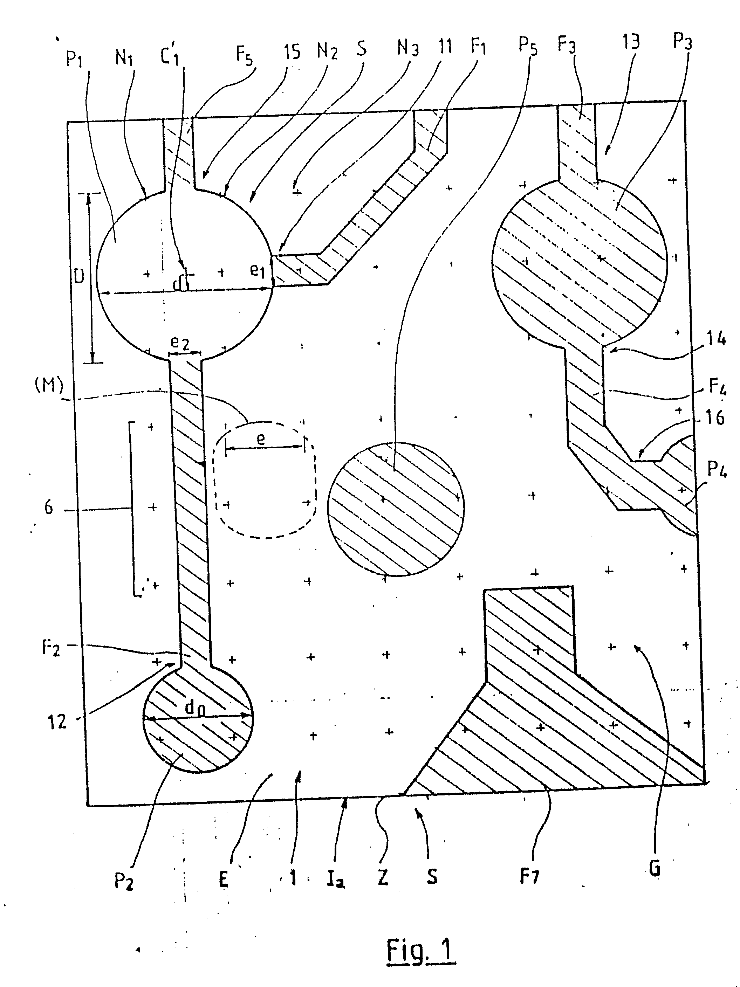

La figure 1 montre une portion (Z) d'un cliché - (1) de circuit imprimé. Sur ce cliché (1), réalisé en matière plastique transparente, les pastilles ($P_1$, $P_2$, $P_3$, $P_4$, $P_5$), les filaments ($F_1$, $F_2$, $F_3$, $F_4$) ainsi que les zones de masse ($F_7$) ont été réalisés par un procédé photographique qui les a rendu noir opaque.

La scène (S) constituée par le cliché (1) est éclairée par le dessous, notamment par un système de boîte à lumière (non représenté) de manière à faire apparaître distinctement :

-en noir, les formes (f) constituées par les pastilles ($P_1$, $P_2$, $P_3$, $P_4$, $P_5$), les filaments ($F_1$, $F_2$, $F_3$, $F_4$) et les zones de masse ($F_7$) ;

-et en blanc, le fond de la scène (E).

Les clichés (1) ont deux fonctions essentielles dans la fabrication des circuits imprimés :

-d'une part, ils servent de masque de sérigraphie lors de l'insolation des sandwichs (cuivre-epoxy) qui après développement et gravure permettent de dégager les pastilles, les connecteurs et plans de masse des circuits,

-et d'autre part, ils constituent une référence métrologique, lors de la programmation des machines à commande numérique destinées à percer les circuits, pour ménager les trous à l'intérieur desquels sont introduites les pattes des composantes.

Le procédé de l'invention peut être avantageusement utilisé pour effectuer la programmation automatique de perçage des circuits imprimés à partir des clichés (1).

En effet, la scène (S) constituée par le cliché - (1) comporte des figure (f) composées :

-d'une part, des zones sensibles (S) à identifier, celles-ci étant constituées par les pastilles ($P_1$, $P_2$, $P_3$, $P_4$, $P_5$ ...) dont les coordonnées des centres ($C'_1$) doivent être déterminées pour être percées,

-et d'autre part, des figures auxiliaires (F), consitutées par les filaments ($F_1$, $F_2$, $F_3$, $F_4$ ...), et les plans de masse ($F_7$...).

Les pastilles ($P_1$, $P_2$, $P_3$, $P_4$, $P_5$ ...) sont disposées aléatoirement sur le cliché (1).

Les figures auxiliaires (F) sont sans utilité pour effectuer la programmation de perçage et ne font que compliquer le processus de recherche des pastilles ($P_1$, $P_2$, $P_3$, $P_4$, $P_5$ ...) du fait qu'elles intersectent à des endroits de liaison (11, 12, 13, 14, 15, 16) les pastilles ($P_1$, $P_2$, $P_3$, $P_4$, $P_5$ ...).

On constate néanmoins que les pastilles ($P_1$, ...) ont, localement des dimensions transversales ($d_1$) plus importantes que les largeurs ($e_1$, $e_2$...) des filaments ($F_1$, $F_2$,...) qui y aboutissent. En sorte qu'elles constituent un renflement vis-à-vis des figures auxiliaires qui les intersectent.

En outre les pastilles ($P_1$, $P_2$, $P_3$, $P_4$, $P_5$ ...) sont discernables par le fait qu'elles présentent une symétrie centrale du fait qu'elles sont circulaires.

Le principe d'analyse automatique de forme de l'invention vise :

-à distinguer automatiquement les pastilles ($P_1$, $P_2$,

$P_3$, $P_4$, $P_5$ ...) vis-à-vis des autres figures auxiliaires ($F_1$, $F_2$, $F_3$, $F_4$, $F_5$, $F_6$, $F_7$ ...) qui, elles, ne sont pas symétriques,

- et de plus, à déterminer automatiquement avec précision les centres ($C'_1$, ...) des pastilles ($P_1$, ...).

Pour ce faire, une première étape consiste à saisir, avec une caméra (non représentée) une fenêtre image (Ia) recouvrant la portion à analyser (Z) et à l'intérieur de laquelle se trouve les formes (f). Une telle fenêtre (Ia) apparaît figure 1.

Une seconde étape consiste à digitaliser la fenêtre (Ia) c'est-à-dire, à mémoriser par un procédé électronique l'image (Ia) en une image digitalisée (Id) apparaissant partiellement figure 2'.

En fonction de leur niveau de gris, on associe aux figures (f) et au fond (E) une valeur binaire différente. En particulier, on affecte aux pavés (20, 21) recouvrant les formes (f) et notamment les pastilles ($P_1$) et les filaments ($F_2$) le digit zéro correspondant à la couleur noire. De même, on affecte aux pavés (23) du fond (E) le digit un correspondant à la couleur blanche. C'est sur l'image numérisée (Id) que le procédé électronique de traitement d'image de l'invention est mis en oeuvre.

Une troisième étape a pour objet de se fixer au moins un premier point d'essai (co) à l'intérieur de chaque forme (f) susceptible d'intégrer une zone sensible (P), et notamment une pastille ($P_1$). Pour ce faire, une méthode recommandée par l'invention est décrite figure 1. Cette méthode consiste à parcourir toute la scène (S) et découvrir toutes les zones sensibles (P) contenues dans ces formes (f). Pour ce faire, on se fixe une grille d'essai (G) de maille (M) constante comportant une pluralité de noeuds ($N_1$, $N_2$, $N_3$, ...) et recouvrant l'intégralité de la scène (S). En chaque noeud ($N_1$, $N_2$, $N_3$, ...), de la grille (G), on effectue systématiquement sur l'image digitalisée (Id) l'analyse du niveau binaire (zéro ou un) significatif du niveau de gris des points ($N_1$, $N_2$, ...). On détermine ainsi les noeuds ($N_1$, $N_2$, ...) situés à l'intérieur d'une figure (f) et notamment d'une pastille ($P_1$) et les noeuds ($N_3$) situés dans le fond (E). Les noeuds ($N_1$) situés à l'intérieur d'une forme digitalisée (fd) constituent des points d'essai ultérieurs pour la mise en oeuvre du procédé électronique d'analyse des formes (f).

Ainsi le point ($N_1$) situé à l'intérieur de la pastille ($P_1$) constitue un point de test (co). Au cours d'une quatrième étape, détaillée figure 2, on trace autour du point (co) une famille de cercles concentriques ($Co^k$) avec (k = 1, 2, ...).

Le diamètre (dk) des cercles est croissant. Les cercles ($Co^k$) sont réalisés, à l'intérieur de l'image digitalisée (Id), de manière discrète, par juxtaposition de pixels. Par simplification, ils sont tracés en pointillés sur la figure 2. Ainsi on a tracé autour du point de test (co), les cercles ($Co^1$) et ($Co^2$).

Chaque cercle ($Co^k$) est divisé en (q) arcs de cercles ($Qo^{kl}$) avec (1 < q) correspondant à (q) quartiers ($Oo^1$) répartis autour du centre approximatif (co). Dans le cas présent, on a choisi : q = 4. Les cercles ($Co^1$, $Co^2$, ...) sont divisés en quatre quartiers ($Qo^{1,1}$ $Qo^{1,2}$, ..., $Qo^{2,1}$, $Qo^{2,2}$, ...) correspondant à quatre quartiers ($Oo^1$) répartis autour du point de test (co).

Pour chaque cercle ($Co^k$) tracé, on procède à un test visant à déterminer si le cercle ($Co^k$) est, ou non, entièrement contenu à l'intérieur de la forme digitalisée (fd) correspondante. Tant que les cercles ($Co^k$) sont entièrement contenus à l'intérieur de la forme digitalisée (fd), comme c'est le cas pour le cercle ($Co^1$), on fait croître successivement, au cours d'une cinquième étape, le diamètre (dk) des cercles ($Co^k$, $Co^{k+1}$, ...).

Au contraire, dès qu'un cercle ($Co^i$) de la famille, tel est le cas pour ($Co^2$), coupe la forme digitalisée (fd), c'est-à-dire qu'au moins un point (e) du cercle ($Co^2$, ...) se trouve dans la zone extérieure de la forme (fd) digitalisée, correspondant au fond (Ed) digitalisé, on détermine le nombre (qo) d'arcs de cercles ($Qo^{ij}$) du cercle ($Co^i$) coupant la forme digitalisée (fd).

Lorsque, ce qui est le cas le plus fréquent, un seul arc ($Qo^{2,1}$) du cercle ($Co^2$) coupe la forme digitalisée (fd), on choisit, au cours d'une septième étape, un nouveau point d'essai (c1), décalé dans le sens opposé à la direction de l'arc ($Qo^{2,1}$) intersectant la forme (fd) digitalisée. On itère ensuite, à partir de ce nouveau point test (c1) les étapes quatre à sept du procédé développé ci-dessus. On crée ainsi une suite de points d'essais (co, c1, c2, c3, ....., cn, ...). Il arrive parfois, comme c'est le cas pour le point d'essai (c4) que le premier cercle ($C_4^{13}$) coupe la forme (fd) par deux arcs ($Q_4^{13,1}$) et $Q_4^{13,2}$). Il est alors recommandé par l'invention, de choisir un nouveau point d'essai (c5) décalé dans une direction opposée aux deux arcs ($Q_4^{13,1}$) et ($Q_4^{13,2}$) sécants à la forme digitalisée (fd). Puis on itère de nouveau les étapes du procédé.

On constate qu'à partir du point (c5) la suite des points de test (cn) devient stationnaire autour du point milieu (c).

L'application du procédé de l'invention consiste alors :
- à considérer que la forme (f) analysée comprend vraisemblablement une pastille présumée (P),
- et que le centre présumé de cette pastille est (c).

Lorsque l'on souhaite traiter des pastilles à deux axes de symétries, telles que des pastilles oblongues, il arrive que lorsque la suite (cn) converge vers le centre de symétrie, des arcs symétriques et opposés coupent la forme digitalisée. Pour tenir compte de cette situation, (non représentée), on choisit un nombre pair (q) d'arcs, notamment quatre. Et pour toutes les familles de cercles ($Cn^k$) on regroupe les arcs ($Qn^{kl}$) par paires symétriques opposées. Chaque fois, qu'au cours de la croissance des diamètres ($dk$), un premier cercle ($Cn^i$) d'une famille de cercles ($Cn^k$) centrée sur un point de test ($cn$), coupe une forme digitalisée ($fd$), on s'intéresse alors aux paires symétriques d'arcs dont un seul arc ($Qn^{il}$) coupe la forme digitalisée ($fd$). Et, s'il existe au moins une paire d'arcs de ce type, à intersection disymétrique, on choisit un nouveau point ($cn + 1$) d'essai, décalé par rapport au point d'essai ($cn$) dans une direction opposée à celle des seuls arcs ($Qn^{il}$) intercédant la forme digitalisée ($fd$).

Dans tous les cas, ainsi que cela apparaît figure 3, l'on stoppe et l'on rend stationnaire l'évolution de la série des points d'essai ($cn$) inclus dans la forme digitalisée ($fd$), dès l'instant où pour un des points ($cn$) :

-d'une part il existe un cercle ($Cn^k$), centré sur ce point d'essai ($cn$) entièrement compris à l'intérieur de la forme digitalisée ($fd$),

-et d'autre part que, le cercle suivant ($Cn^{k+1}$) de la famille, centré sur le point d'essai ($cn$), possède un nombre ($N$) d'arcs ($Qn^{k+1,1}$) intersectant la forme digitalisée ($fd$) supérieur à un seuil minimal d'acceptation ($A$) avec ($A \leq q$).

L'on considère alors que le point d'essai ($cn$) est un centre de symétrie présumé ($c$) d'une zone sensible ($P$) incluse dans la forme ($f$) analysée.

Dans le cas décrit figure 3, on a choisi un nombre d'arcs ($q = 4$). En outre, on a choisi un seuil minimal d'acceptation ($A = 4$). Le centre ($cn$) vérifie la double condition suivante :

-il existe un cercle ($Cn^k$), centre sur le point d'essai ($cn$), situé entièrement à l'intérieur de la forme digitalisée ($fd$),

-et tous les arcs ($Qn^{k+1,l}$, $Qn^{k+1,2}$, $Qn^{k+1,3}$, $Qn^{k+1,4}$) du cercle $Cn^{k+1}$, coupent la forme digitalisée ($fd$).

Le point ($cn$) est considéré comme centre de symétrie ($c$) d'une zone sensible ($P$) présumée située à l'intersection de la forme ($f$).

Les performances de recherches automatiques des centres de symétrie ($c$), à l'aide du procédé de l'invention peuvent atteindre tout niveau requis. Elles dépendent essentiellement :

-de la taille des pavés pixels (20, 21...);

-du pas de déplacement relatif des points de tests successifs ($cn$, $cn + 1$..),

- de l'evolution des diamètres ($dk$) des cercles d'essai.

Il est recommandé par l'invention de se fixer les contraintes suivantes :

-taille de pixels (20, 21...) inférieure ou égale à la precision ($s$),

-incrément des diamètres ($dk$), ($dk + 1 - dk$), inférieur ou égal à la précision ($s$),

-déplacement élémentaire entre deux points de test successifs ($cn$) et ($cn + 1$) inférieur à la présicion ($s$).

En particulier, en référence à la figure 2, on constate que le déplacement le plus fréquent entre deux points de test ($co$, $c1$) est un vecteur ($V1$) pouvant prendre quatre directions opposées à l'arc $Qo^{kl}$ intersectant la forme. En particulier, on remarque que le déplacement entre les centres ($co$) et ($c1$) est un vecteur ($V1$) bissecteur au quartier ($Oo^3$) opposé à celui ($Oo^1$) de l'arc ($Qo^{21}$) intersectant la forme digitalisée ($fd$).

Lorsque deux arcs non opposés d'un premier cercle ($Cn^k$) centré sur un point de test ($cn$) coupent la forme digitalisée ($fd$), on peut combiner deux vecteurs de déplacement élémentaire comme cela apparaît pour le déplacement ($c4$, $c5$).

Dans la majorité des cas, on choisit une série de diamètres ($dk$) des familles de cercles ($Cn^k$) constituée par une progression géométrique ($dk$) = $Do \times (k + ko)$ identique pour chaque famille de cercles ($Cn^k$). C'est-à-dire que l'acroîssement entre deux diamètres ($dk$, $dk$...) successifs est constant. On choisit en outre la constante ($ko$) et l'argument ($Do$) de telle manière que le premier diamètre ($d_1$) = $Do \times (1 + ko)$ soit sensiblement inférieur à la dimension transversale ($do$) de la plus petite pastille ($P_2$). L'argument ($Do$) est inférieur ou égal à la précision absolue ($s$) recherchée dans la détermination des centres de symétrie ($c$).

En outre, la grille d'essai ($G$) est préférentiellement à maille carrée ($M$) de côté ($e$) inférieure à la dimension ($do$) de la plus petite pastille ($P_2$). Dans ce cas, il est recommandé que l'argument ($Do$) et le côté ($e$) vérifie la relation ($e + Do < do$), ceci afin d'être sûr qu'au moins un premier cercle ($Co^1$) d'une famille de cercles centrés sur un point d'essai ($co$) soit entièrement situé à l'intérieur de chaque forme ($f$) analysée.

Lorsqu'un centre de symétrie présumé exact, d'une zone sensible présumée ($P$) est découvert à l'intérieur d'une forme ($f$), on procède à un test complémentaire de confirmation décrit figures 4, 5 et 6. Pour ce faire, on procède à l'analyse ligne par ligne de la forme digitalisée ($fd$) dans au moins une direction ($X X'$) et de préférence deux directions, l'une ($X X'$) et l'autre ($Y Y'$).

Dans le cas de l'analyse selon la direction ($X X'$), on mesure à chaque ordonnée ($Y$) de la seconde direction ($Y Y'$) la largeur ($L$) de la forme digitalisée ($fd$). On étudie (figure 6), la variation de la largeur ($L$) de la forme digitalisée en fonction du niveau ($g$).

De même, on étudie la variation de la hauteur ($H$) de la forme, selon la direction ($Y Y'$) en fonction de l'abscisse $x$ (figure 5).

Du fait de l'hypothèse faite qu'une pastille ($P$) est plus grosse qu'un filament ($F$) qui y aboutit, on constate que les courbes d'évolution des figures 5 et 6 présentent toutes les deux :

-une zone ($Z_1$, $Z'_1$) de croissance de l'amplitude de la forme,

-et une zone ($Z_2$, $Z'_2$) de décroissance.

Il est recommandé par l'invention de ne confirmer un centre de symétrie présumé (c) que s'il répond dans les deux directions (X X') et (Y Y') à cette condition de phases de croissance et décroissance.

Il est également recommandé de faire subir au centre présumé (c) un second test relatif à l'amplitude maximale. En effet, les formes (f) contenant une pastille (P) ont une amplitude maximale (A, A') supérieure au diamètre (do) de la plus petite pastille ($P_2$). On ne confirme donc un centre de symétrie présumé que si, selon les deux directions (X X') et (Y Y'), l'évolution de l'amplitude (L, H) de la forme (f) présente une zone d'excroissance (H H') d'amplitude (A, A') supérieure à la dimension transversale (do) de la plus petite pastille ($P_2$).

Un moyen de confirmation complémentaire d'un centre de symétrie (c) présumé consiste à comparer le diamètre (dn) du dernier cercle (Cn) inclus à l'intérieur d'une forme digitalisée (fd) avec la dimension transversale (do) de la plus petite pastille ($P_2$) de la scène (S) et de même, à comparer le diamètre (dn + 1) du cercle (Cn + 1) avec les dimensions transversales (D) = (d1) de la plus grande pastille ($P_1$). On ne confirme alors le centre de symétrie présumé que si les relations suivantes sont vérifiées :

-(dn) > (do),

-et/ou (dn + 1) < (D)

ou toute relation équivalente. On peut alors considérer que la forme (f) contient bien une pastille (P) de centre (c) et de cercle inscrit de diamètre (dn).

Lorsqu'un centre (c) d'une pastille circulaire (P) a été déterminé et confirmé selon les méthodes précédentes, on procède à une vérification du diamètre. Pour ce faire, on détermine l'amplitude centrale de la forme, c'est-à-dire la distance ($A_1$ CA'$_1$) dans plusieurs directions ($a_1$, $a'_1$), ($a_2$, $a'_2$), ($a_3$, $a'_3$), ($a_4$, $a'_4$) et notamment quatre. Et si, les valeurs ($A_1$ CA'$_1$) de l'amplitude centrale sont confirmées à une valeur (Ao) à (y %) au moins (N fois), (Y) et (N) étant des paramètres probablement choisis, on considère que le diamétre de la pastille (P) est (Ao).

Le procédé décrit ci-dessus, mis en oeuvre de manière électronique, permet de détecter automatiquement les zones sensibles symétriques (P) quelconques sur une scène (S) ainsi que leur centre de symétrie (c) et ce, avec une précision absolue. La détermination peut être effectuée indépendamment de la présence de figures auxiliaires (F).

Ce procédé est d'un emploi particulièrement avantageux dans tous les domaines du traitement des formes et de l'analyse automatique des images. Il trouve une application particulièrement efficace pour assurer la programmation automatique du perçage des circuits imprimés à partir de clichés.

L'invention ayant maintenant été décrite, et son intérêt justifié sur un exemple détaillé, les demandeurs s'en réservent l'exclusivité pendant toute la durée du brevet, sans limitation autre que celle des revendications ci-après.

## Revendications

1) Procédé électronique d'analyse de formes (f) d'une scène (S) et afin de distinguer automatiquement parmi les formes (f),des zones sensibles symétriques (P), intersectées par des figures auxiliaires (F), disposées aléatoirement sur la scène (S) et déterminer le centre de symétrie (c) de ces zones sensibles (P), lesdîtes zones sensibles (P) et éventuellement les figures auxiliaires (F) étant distingables du fond (E) de la scène (S) par leur niveau de gris aboutissant après digitalisation à un niveau binaire différent pour les différentes formes (f) et pour le fond (E) ;

ce procédé consistant, pour identifier si une forme (f) contient localement une zone sensible (P).

-$a_1$) à saisir avec une caméra, une fenêtre (la) recouvrant la zone d'inspection de la forme (f),

-$a_2$) à digitaliser ladite fenêtre (la) sous forme d'une image de travail numérique (ld) contenant la forme digitalisée (fd),

-$a_3$) et à se fixer un point d'essai (co) situé à l'intérieur de la forme digitalisée (fd), Ledit procédé étant caractérisé en ce que :

-$a_4$) l'on trace, autour du point d'essai (co), une famille de cercles concentriques ($Co^k$), de diamètres (dk) croissants, centrés sur le point d'essai (co), chaque cercle ($Co^k$) étant divisé en (q) arcs ($Qo^{kl}$) avec (l ≤ q) correspondant à (q) quartiers ($Oo^l$) répartis autour du point de test (co) ;

-$a_5$) tant que les cercles ($Co^k$) de la famille sont entièrement contenus à l'intérieur de la forme digitalisée (fd), on fait successivement croître le diamètre des cercles ($Co^k$, $Co^{k+1}$,...) ;

-$a_6$) dès qu'un cercle ($Co^i$), de la famille coupe la forme digitalisée (fd), c'est-à-dire qu'au moins un point (e) du cercle ($Co^i$) se trouve dans la zone extérieure de la forme (fd), correspondant au fond (Ed) digitalisé, on détermine le nombre (qo) d'arcs ($Qo^{ij}$) du cercle ($Co^i$) coupant la forme digitalisée (fd) ;

-$a_7$) si, ce qui est le cas le plus fréquent, un seul arc ($Qo^{ij}$) du cercle coupant ($Co^i$), intersecte la forme (fd) digitalisée, -alors on choisit un nouveau point d'essai (c1), décalé dans le sens opposé à la direction de l'arc (Qo$^{ii}$) interesectant la forme (fd), -et on itère à partir de ce nouveau point d'essai (c1) les étapes (a4) à (a7) du procédé, -en créant une suite convergente (cn) de points d'essais, tant que l'unicité d'intersection des arcs (Qn$^{kl}$) de cercles (Cn $^k$) vers la forme digitalisée (fd) est maintenue,

-a$_8$) si la suite (cn) converge vers un point limite (c) ou devient stationnaire au voisinage d'un point (c), on considère que :

-la forme (f) comprend vraisemblablement une zone sensible présumée (P).

-centrée sur le centre présumé (c).

2) Procédé électronique, selon la revendication 1 précédente, de détection automatique de zones sensibles symétriques (P) et de détermination automatique des centres de symétries (c) de ces zones sensibles (P), caractérisé en ce que l'on choisit un nombre pair (q) d'arcs (Qn$^{kl}$), et notamment quatre arcs, pour toutes les familles de cercles (Cn $^k$), les arcs (Qn$^{kl}$) étant définis par des quartiers (On$^l$) de directions fixes, et les arcs (Qn$^{kl}$) étant pour chaque cercle (Cn$^k$) regroupés par paire symétrique d'arcs opposés.

3) Procédé électronique, selon la revendication 2 précédente, de détection automatique de zones sensibles symétriques (P) et de détermination automatique des centres de symétrie (c) de ces zones sensibles (P) ; ce procédé étant caractérisé en ce que :

chaque fois qu'au cours de la croissance des diamètres (dk), un premier cercle (Cn $^i$) d'une famille de cercles (Cn$^k$) centrés sur un point de test (cn), coupe la forme digitalisée (fd) analysée, -on détermine les paires symétriques d'arcs dont un seul arc (Qn$^{il}$) coupe la forme digitalisée (fd), -et, si il existe au moins une paire d'arcs de ce type, à intersection dissymétrique, on choisit un nouveau point d'essai (cn + l) décalé par rapport au point d'essai précédent (cn) dans une direction opposée à celle du seul arc (Qn$^{il}$), intercédant la forme digitalisée (fd).

4) Procédé électronique, selon l'une des revendications 1 à 3 précédentes, de détection automatique des zones sensibles symétriques et de détermination automatique de centres de symétrie (c) de ces zones sensibles (P), caractérisé en ce que :

-l'on stoppe et l'on rend stationnaire l'évolution de la série des points d'essai (cn) inclus dans une forme digitalisée (fd), dès l'instant où, pour un point d'essai (cn) de la série :

. d'une part, il existe un cercle (Cn$^k$), centré sur ledît point d'essai (cn) entièrement compris à l'intérieur de la forme digitalisée (fd) analysée,

. et d'autre part, le cercle suivant (Cn$^{k+l}$) de la famille, centré sur le point d'essai (cn), possède un nombre (N) d'arcs (Qn$^{k+1,i}$) intersectant la forme digitalisée (fd), supérieur à un seuil minimal d'acceptation A (A $\leq$ q).

-et l'on considère alors que le dernier point d'essai (cn) est un centre de symétrie présumé (c) d'une zone sensible (P) incluse dans la forme (f).

5) Procédé électronique, selon la revendication (4) précédente, de détection automatique des zones sensibles (P) et de détermination automatique des centres de symétrie (c) de ces zones sensibles (P), caractérisé en ce que :

-l'on stoppe et l'on rend stationnaire l'évolution de la série des points d'essais (cn) inclus dans une forme (f), dès l'instant où, pour un point d'essai (cn) de la série,

. d'une part, il existe un cercle (Cn$^k$), centré sur ledit point d'essai (cn), entièrement compris à l'intérieur de la forme digitalisée (fd),

. et d'autre part, tous les arcs (Qn$^{k+1,l}$) du cercle suivant (Cn$^{k+1}$) de la famille, centrés sur le point d'essai (cn), intersectent la forme digitalisée (fd).

-et l'on considère alors que le dernier point d'essai (cn) est un centre de symétrie présumé d'une zone sensible (P) incluse dans la forme (f).

6) Procédé électronique, selon l'une des revendications 1 à 5 précédentes, caractérisé en ce que l'on utilise une série des diamètres (dk) des familles de cercles (Cn $^k$), constituée par une progression géométrique (dk) = (Do) x (k + ko), identique pour chaque famille de cercles, où la constante (ko) est choisie de telle manière que le premier diamètre (d1) = (Do) x (l x ko) soit inférieur à la dimension transversale (do) de la plus petite zone sensible recherchée, et où l'argument (D) de la progression géométrique est sensiblement égal à précision absolue requise (s) dans la détermination automatique des centres de symétrie (c).

7) Procédé électronique selon l'une des revendications 1 à 5 précédentes, caractérisé en ce que pour obtenir une précision (s) l'on choisit un déplacement élémentaire entre deux points de test (cn), (cn + 1), ...., constitués par un vecteur (cn, cn + 1)

-orienté sensiblement selon la direction de l'arc (Qn$^{k+1,l'}$) opposé à celui (Qn$^{k+1,l}$) coupant la forme digitalisée (fd),

-et de mesure constante (l) inférieure ou égale à la précision (s) absolue requise.

8) Procédé électronique, selon l'une des revendications 1 à 7 précédentes, de détermination automatique des zones sensibles symétriques (P) caractérisé en ce que, afin de parcourir toute la scène (S) et de découvrir toutes les zones sensibles (P) symétriques contenues dans des formes (f) de la scène, ainsi que le centre de symétrie de chaque zone sensible (P), on effectue systématiquement sur l'image globale digitalisée (Id) de toute la scène (S), une analyse du niveau binaire significatif du niveau de gris d'une pluralité de points de test répartis selon les noeuds ($N_1$, $N_2$...) d'une grille d'essai (G) à maille constante, recouvrant la scène digitalisée (Sd) et on procède à la mise en oeuvre du procédé de l'invention en prenant successivement comme premier point d'essai (Co) les points de test ($N_1$, $N_2$...) de la grille (G) de niveau binaire correspondant aux figures (f).

9) Procédé selon la revendication 8 précédente de détermination des centres de symétrie de zones sensibles de dimension minimale transversale (do) caractérisé en ce que l'on utilise une grille d'essai (G) à maille carrée de côté (c) < (do).

10) Procédé selon l'une des revendications 4 et 5 précédentes, de confirmation d'un centre de symétrie (c) présumé exact d'une zone sensible (P) présumée située à l'intérieur d'une forme (f) ledît procédé destiné à éviter les erreurs dues à la présence des figures auxiliaires (F) intersectant la zone sensible (P) étant caractérisé en ce que :

-dans au moins une première direction (X X'), on mesure, sur l'image digitalisée, l'évolution selon une seconde direction (Y Y') (perpendiculaire à la première), de la largeur de la forme digitalisée (fd), -et l'on en confirme ledît centre de symétrie présumé (c) ainsi que l'existance d'une zone sensible (P), que si l'évolution de la largeur de la forme selon (Y Y') présente une phase de croissance, suivie d'une phase de décroissance.

11) Procédé selon la revendication 10 précédente, de confirmation d'un centre de symétrie (c) présumé exact d'une zone sensible (P), ledit procédé étant caractérisé en ce que l'on ne confirme un centre de symétrie (c) présumé que si, entre ladîte phase de croissance et ladîte phase de décroissance, la forme digitalisée (fd) présente une zone d'excroissance de largeur supérieure à la dimension transversale (do) de la plus petite zone sensible de la scène.

12) Procédé selon l'une des revendications 4 et 5 précédentes de détermination automatique des zones sensibles (P) et de détermination automatique de leur centre de symétrie (c), ledît procédé étant caractérisé en ce que, pour chaque centre de symétrie présumé (c) trouvé,

- l'on compare le diamètre (dn) du dernier cercle (Cn) inclus à l'intérieur, avec la dimension transversale minimale (do) de la plus petite zone sensible de la scène (S),

-et/ou l'on compare le diamètre (dn + l) du cercle (Cn + l) avec les dimensions transversales (Do) de la plus grande zone sensible de la scène (S),

-et l'on ne confirme que le centre de symétrie présumé est un centre exacte que si :

. (dn) $\geq$ (do),

. et/ou (dn + l) $\leq$ (Do)

ou toute comparaison équivalente.

-l'on considère alors que la forme (f) contient une zone sensible symétrique (P) de centre (c) et de cercle inscrit de diamètre (dn).

13) Procédé selon l'une des revendications 1 à 12 précédentes, de détermination automatique de diamètre de zones sensibles circulaires (P), distinguées à l'intérieur de la scène (S), ledît procédéétant caractérisé en ce que après détermination et confirmation du centre (c) de la zone sensible (P) ;

on détermine les amplitudes centrales de la forme digitalisée (fd) dans (R) directions.

On analyse la répartition statistique desdîtes amplitudes centrales,

-et si les valeurs des amplitudes centrales sont confirmées, à une valeur (A) à (y %) près, au moins N fois, on considère que le diamètre (d) de la zone sensible (P) est égal à (A).

Fig. 1

0 272 358

Fig. 2

Fig. 2'

Fig. 3

## Fig. 4

## Fig. 5

## Fig. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 288 852  (HOLLAND) <br> * Colonne 6, lignes 39-50 * | 1 | G 06 F   15/70 |
| | --- | | |
| A | PATENT ABSTRACTS OF JAPAN, vol. 6, no. 133 (P-129)[1011], 20 juillet 1982; & JP-A-57 57 367 (MITSUBISHI DENKI K.K.) 06-04-1982 <br> * Résumé * | 1 | |
| | ----- | | |

DOMAINES TECHNIQUES
RECHERCHES (Int. Cl.4)

G 06 F   15/70

Le présent rapport de recherche a été établi pour toutes les revendications

| Lieu de la recherche <br> LA HAYE | Date d'achèvement de la recherche <br> 02-07-1987 | Examinateur <br> BURGAUD C. |
|---|---|---|